# EUROPEAN PATENT SPECIFICATION

(11) **EP 1 642 823 B1**
(45) Date of publication and mention of the grant of the patent: **25.01.2012**
(21) Application number: 05017423.4
(22) Date of filing: 10.08.2005
(51) Int. Cl.: B62M 25/08, B62L 3/02, B62K 23/06

(54) **Bicycle brake control device with electrical operating member**
Fahrradbremssystem mit elektrischem Bedienelement
Dispositif de freinage de bicyclette avec un organe de commande à action éléctrique

(30) Priority: 30.09.2004 US 953458
(43) Date of publication of application: 05.04.2006
(73) Proprietor: SHIMANO INC., Osaka 590-8577 (JP)
(72) Inventor: Fujii, Kazuhiro, Osaka (JP)
(74) Representative: GROSSE SCHUMACHER KNAUER VON HIRSCHHAUSEN

(56) References cited:
- EP-A1- 0 853 036
- EP-A1- 1 264 765
- EP-A2- 1 245 482
- JP-U- 2 120 299
- JP-U- 58 186 990
- US-A1- 2001 053 724

## Description

### BACKGROUND OF THE INVENTION

### Field of the Invention

This invention generally relates to a bicycle brake control device. More specifically, the present invention relates to a bicycle brake control device with an electrical operating member movably coupled to an ergonomically shaped brake lever of the brake control device.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One component that has been extensively redesigned is the bicycle brake operating device.

Typically, a bicycle brake operating device includes a lever pivotally coupled to a bracket. The bracket is usually fixed to the handlebar. Moving the lever pulls a brake cable, which actuates a conventional braking device. In recent years, shifting devices have been incorporated with brake control devices. The shifting devices that have been incorporated with the brake control devices are usually mechanical levers that move relative to the bracket to pull/release a mechanical shift cable. Thus, the rider is able to operate both a brake device and a derailleur with each brake operating device. In recent years, bicycles have also been equipped with electrical components. These components are typically operated by electrical control devices that are mounted to the handlebar or the like.

Document EP 0 853 036 A has a brake lever movable along a braking plane, and an electrical operating member mounted to the rear side of the brake lever. The electrical operating member comprises a mounting portion and a rider engagement portion rotating together about a rotating axis. The rider engagement portion is located laterally outwardly from the mounting portion and spaced laterally from the braking plane. However, the rider engagement portion can be reached by fingers of a rider only from one lateral side of the brake lever.

While these previous braking, shifting and electrical control devices work well, they are not always as convenient and/or comfortable to operate for the rider. Specifically, the rider sometimes has to move the hands to various hand positions on the handlebar to operate these various devices. Alternatively, if the rider does not need to move the hands to different positions, it can be inconvenient and/or uncomfortable to operate these various devices.

In view of the above, it will be apparent to those skilled in the art from this disclosure that there exists a need for an improved bicycle brake control device with an electrical operating member. This invention addresses this need in the art as well as other needs, which will become apparent to those skilled in the art from this disclosure.

### SUMMARY OF THE INVENTION

One object of the present invention is to provide a bicycle brake control device with an electrical operating member, which has an ergonomic configuration.

Another object of the present invention is to provide a bicycle brake control device with an electrical operating member that is easy to operate.

Yet another object of the present invention is to provide a relatively compact bicycle brake control device with an electrical operating member that allows the rider to carry out braking and speed change operations without difficulty.

Still another object of the present invention is to provide a bicycle brake control device with an electrical operating member that is relatively simple and inexpensive to manufacture and/or assemble.

The foregoing objects can basically be attained by providing a bicycle brake control device according to claim 1 of the invention. The bicycle brake control device comprises a brake lever bracket, a brake control lever and an electrical operating member. The brake lever bracket is configured and arranged to be fixedly attachable to a mounting portion of a bicycle handlebar with a handlebar centerline extending through the mounting portion. The brake lever bracket comprises a gripping body and a band clamp to clamp around the mounting portion of the handlebar. The band clamp defines a clamp axis to coincide with the handlebar centerline of the mounting portion of the handlebar when clamped thereto.

The brake control lever is pivotally coupled to the gripping body about a pivot pin with a pivot axis. The brake control lever is configured to move from a rest position along a braking plane to a braking position about the pivot axis. The braking plane is perpendicular to the pivot axis and substantially coincides with the clamp axis of the band clamp. The brake control lever including a proximal portion pivotally coupled to the brake lever bracket and a distal portion extending from the proximal portion. The electrical operating member is movably coupled to the distal portion of the brake control lever to electrically operate a bicycle component. The electrical operating member includes a mounting portion and a rider engagement portion rotating together about a rotating axis aligned with or located slightly laterally outwardly from the braking plane. The rider engagement portion of the electrical operating member is located laterally outwardly from the mounting portion of the electrical operating member, and is spaced laterally outwardly from the braking plane as measured perpendicularly relative to the braking plane when the brake control lever is positioned in the braking position. The distal portion of the brake control lever has a laterally outermost distal edge located laterally outwardly from a laterally outermost proximal edge of the proximal portion as measured perpendicularly relative to the braking plane. The mounting portion of the electrical operating member is thinner than the rider engagement portion as measured along the rotational axis.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:
Figure 1 is a side elevational view of a bicycle equipped with a pair of bicycle brake control devices (only one shown) in accordance with a first embodiment of the present invention;
Figure 2 is a partial enlarged front elevational view of the handlebar with the right and left brake control devices in accordance with the present invention;
Figure 3 is an outside elevational view of the right hand side brake control device illustrated in Figures 1 and 2, with the brake control lever in the normal rest (non-braking) position;
Figure 4 is an inside elevational view of the right hand side brake control device illustrated in Figures 1 and 2, with the brake control lever in the normal rest (non-braking) position;
Figure 5 is a further enlarged front elevational view of the right hand side brake control device illustrated in Figures 2-4, with the brake control lever in the normal rest (non-braking) position;
Figure 6 is a rear elevational view of the right hand side brake control device illustrated in Figure 5, with the brake control lever in the normal rest (non-braking) position;
Figure 7 is an outside elevational view of the right hand side brake control lever illustrated in Figures 5 and 6, with the electrical operating member in the neutral or rest position;
Figure 8 is a rear elevational view of the right hand side brake control lever illustrated in Figure 7, with the electrical operating member in the neutral or rest position;
Figure 9 is an outside elevational view of the right hand side brake control device illustrated in Figures 1-6, with the brake control lever in the braking position;
Figure 10 is a front elevational view of the right hand side brake control device illustrated in Figure 9, with the brake control lever in the braking position;
Figure 11 is a rear elevational view of the right hand side brake control lever illustrated in Figures 1-10, with the electrical operating member in a first actuating position;
Figure 12 is a rear elevational view of the right hand side brake control lever illustrated in Figures 1-10, with the electrical operating member in a second actuating position;
Figure 13 is an enlarged outside elevational view of a right hand side brake control device in accordance with a second embodiment of the present invention, with the brake control lever in the normal rest (non-braking) position;
Figure 14 is a front elevational view of the right hand side brake control device illustrated in Figure 13, with the brake control lever in the normal rest (non-braking) position;
Figure 15 is a front elevational view of a modified right hand side brake control lever in accordance with a third embodiment of the present invention;
Figure 16 is a front elevational view of a modified right hand side brake control lever in accordance with a fourth embodiment of the present invention;
Figure 17 is a front elevational view of a right hand side brake control device with a modified brake control lever in accordance with a fifth embodiment of the present invention; and
Figure 18 is a front elevational view of a right hand side brake control device with a modified brake lever bracket in accordance with a sixth embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims.

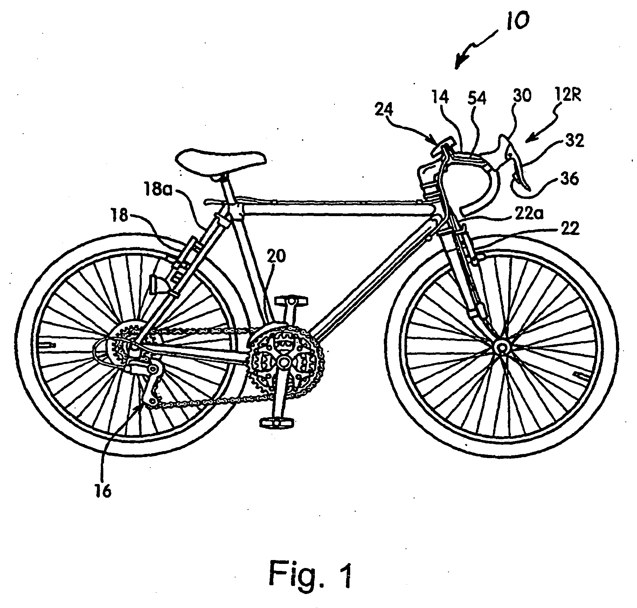

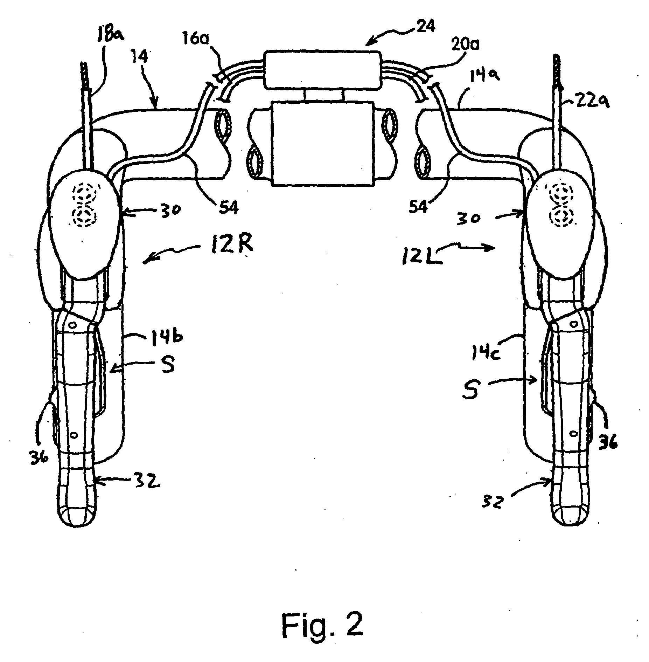

Referring initially to Figures 1 and 2, a bicycle 10 is illustrated with a pair (i.e. right and left) of brake control devices 12R and 12L (only one shown in Figure 1) mounted on a bicycle handlebar 14 in accordance with a first embodiment of the present invention. Each of the brake control devices 12R and 12L includes an ergonomically shaped brake control lever 32 with an electrical switch S coupled thereto to electrically operate a bicycle component in accordance with the present invention, as explained below.

The handlebar 14 preferably includes a transverse portion 14a, and right and left mounting portions 14b and 14c arranged at opposite ends of the transverse portion 14a. A handlebar centerline C extends through the transverse portion 14a and the mounting portions 14b and 14c. The right control device 12R is coupled to the mounting portion 14b, while the control device 12L is coupled to the mounting portion 14c, as best seen in Figure 2.

The right and left hand side brake control devices 12R and 12L are essentially identical in construction and operation, except that they are mirror images of each other. Thus, only the brake control device 12R will be discussed and illustrated in detail herein. However, it will be apparent to those skilled in the art from this disclosure that the descriptions and illustrations of the brake control device 12R also apply to the brake control device 12L. Moreover, the parts of right and left hand side control devices 12R and 12L that are identical or mirror images will be given the same reference numerals herein for the sake of brevity.

In the illustrated embodiment, the electrical switches S are preferably electrical shift control switches that are configured and arranged to operate components of an electronically controlled bicycle transmission, as explained below in more detail. However, it will be apparent to those skilled in the art from this disclosure that the electrical switches S could be utilized to operate other bicycle components as needed and/or desired. For example, the switches S could be used to operate components of an electronically controlled suspension, or any other bicycle components as needed and/or desired.

Referring still to Figures 1 and 2, the right hand side control device 12R is preferably operatively coupled to a rear derailleur 16 via a cycle computer 24, while the left hand side control device 12L is preferably operatively coupled to a front derailleur 20 via the cycle computer 24. Specifically, the electrical switches S are electrically coupled to the cycle computer 24, which in turn electronically operates the derailleurs 16 and 20 in a conventional manner. Also, the right hand side control device 12R is directly coupled to a rear braking device 18 via a brake cable 18a in a conventional manner, while the left hand side control device 12L is directly coupled to a front braking device 22 via a brake cable 22a in a conventional manner.

The cycle computer 24 as well as the derailleurs 16 and 20 are known in the art. Thus, the cycle computer 24 as well as the derailleurs 16 and 20 will not be discussed and/or illustrated in detail herein, except as needed to make and use the control devices 12R and 12L of the present invention. Moreover, since most of the parts of the bicycle 10 are well known in the art, most of the parts of the bicycle 10 will not be discussed or illustrated in detail herein, except for the parts relating to the control devices 12R and 12L of the present invention. Furthermore, it will be apparent to those skilled in the art from this disclosure that various conventional bicycle parts, which are not illustrated and/or discussed in detail herein, can also be used in conjunction with the present invention.

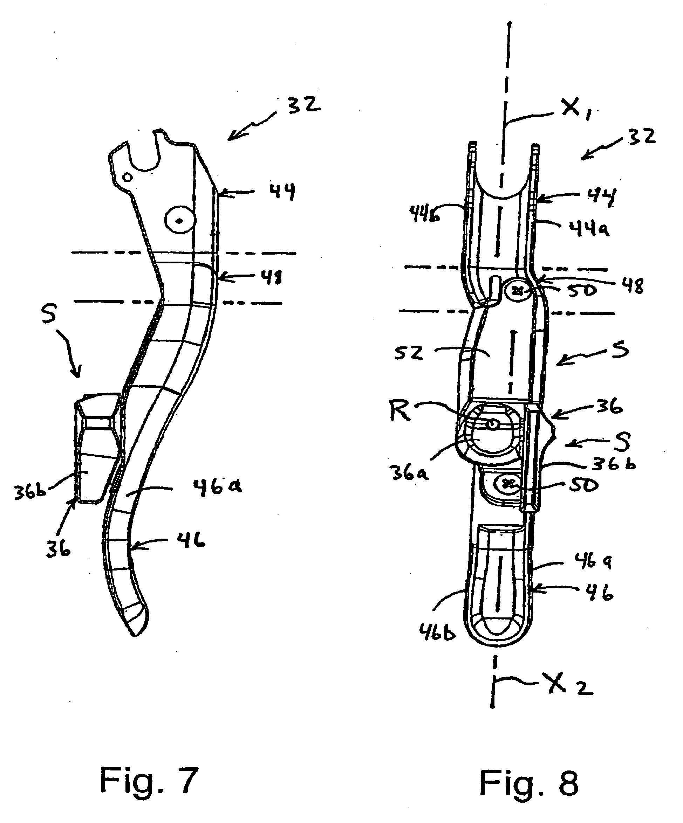

Referring now to Figures 2-12, each of the brake control devices 12R and 12L basically includes a support member or brake lever bracket 30, a brake control lever 32, a brake lever biasing member (not shown), and an electrical switch S with an electrical operating member 36. The cycle computer 24 is electrically coupled to the electrical operating member 36 of the electrical switch S of each of the control devices 12R and 12L via a pair of electrical cords 54, as best seen in Figure 2. Since the control devices 12R and 12L are basically identical, the left control device 12L will not be discussed in further detail herein.

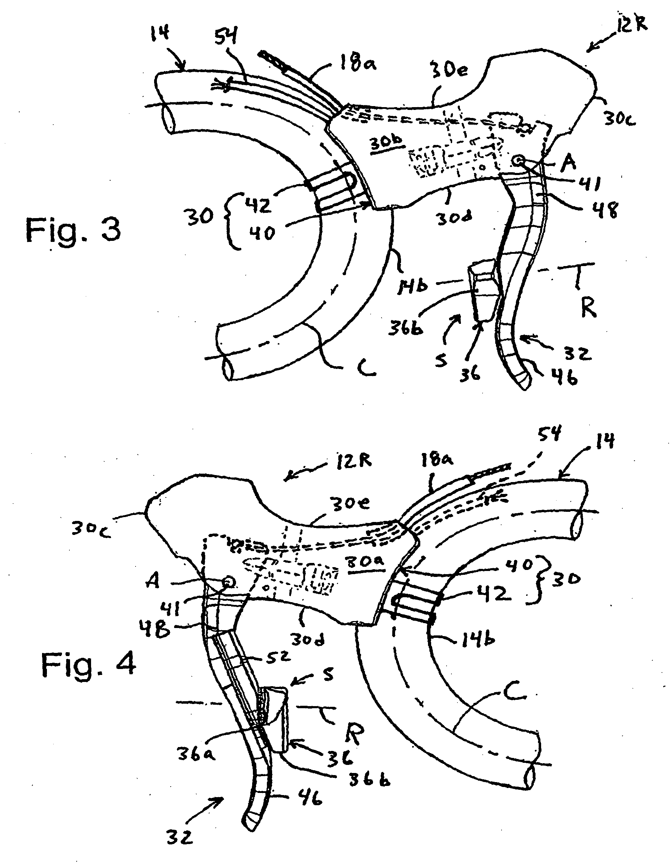

The brake lever bracket 30 of the control device 12R has an inner side wall surface 30a, an outer side wall surface 30b, a front wall surface 30c, a bottom wall surface 30d and a top wall surface 30e. The brake lever bracket 30 basically comprises a rigid support or gripping body 40 and a band or tube clamp 42 as best seen in Figure 3, 4 and 9. The gripping body 40 is configured and arranged to be fixedly coupled to the bicycle handlebar 14 by the band clamp 42 in a conventional manner. According to the invention the band clamp 42 is clamped around the mounting portion 14b of the handlebar 14. The inner side wall surface 30a, the outer side wall surface 30b, the front wall surface 30c, the bottom wall surface 30d and the top wall surface 30e define the exterior periphery of the gripping body 40 that is designed to be grasped by the rider's hand. Of course, it will be apparent to those skilled in the art from this disclosure that other mounting mechanisms can be used as needed and/or desired.

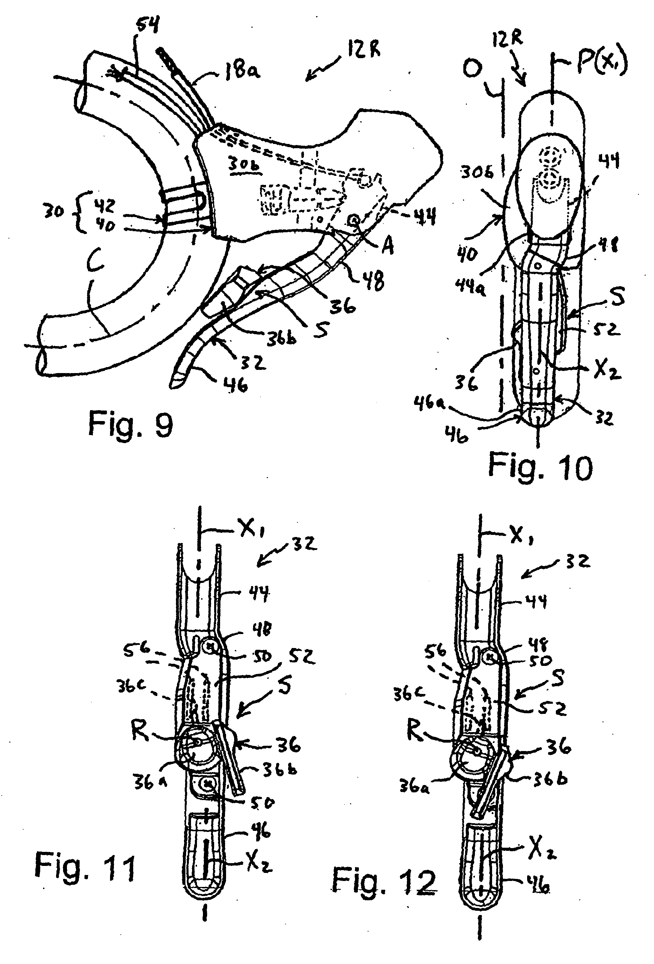

Preferably, a spring (not shown) is mounted between the brake control lever 32 and the gripping body 40 to urge the brake control lever 32 from a braking position (Figures 9 and 10) to a normal rest (non-braking) position (Figures 2-5) in a conventional manner. The brake control lever 32 is pivotally coupled to the gripping body 40 about a pivot pin 41 with a brake pivot axis A. The rider pulls or squeezes the brake control lever 32 toward the handlebar 14 along a brake operating plane P to rotate about the pivot axis A such that the inner wire of the brake cable 18a is pulled in a conventional manner. The brake operating plane P is perpendicular to the pivot axis A and substantially coincident with the centerline C of the mounting portion 14b of the handlebar 14. The brake pivot axis A extends in a transverse direction relative to the brake lever bracket 30.

Referring still to Figures 2-12, the brake control lever 32 basically includes a proximal portion 44, a distal portion 46 and an intermediate portion 48 located between the distal portion 46 and the proximal portion 44. Preferably, the intermediate portion 48 is shaped such that the distal portion 46 is substantially parallel to and offset from the proximal portion 44. Preferably, the proximal portion 44, the distal portion 46 and the intermediate portion 48 are integrally formed together as a one-piece, unitary member from a lightweight, rigid material such as a metallic material or any other suitable material that is known in the art. The electrical switch S is preferably constructed separately, and then fixed to the brake control lever 32.

Preferably, the electrical switch S is fixedly coupled to the distal portion 46 of the brake control lever 32. In the illustrated embodiment, the electrical switch S is also fixedly attached to the intermediate portion 48. Thus, the electrical switch S normally moves with the brake control lever 32 when the brake control lever 32 is moved between the rest position and the braking position. On the other hand, the electrical operating member 36 is movable relative to the brake control lever 32, as explained below. The electrical switch S and/or parts of the electrical switch S may also be fixedly coupled to an appropriate portion of the bicycle 10 apart from the electrical operating member 36 as long as the electrical switch S is electrically connected with the electrical operating member 36.

The proximal portion 44 is pivotally coupled to the brake lever bracket 30. Preferably, the brake lever bracket 30 is arranged and configured such that at least a majority of the proximal portion 44 is completely located within the brake lever bracket 30. The proximal portion 44 extends in a substantially linear direction substantially along the brake operating plane P. Specifically, the proximal portion 44 has a proximal center longitudinal axis X₁ that is centered along the proximal portion 44 and that moves substantially along the brake operating plane P. In other words, the proximal center longitudinal axis X₁ is preferably substantially parallel to and substantially coincident with the brake operating plane P.

The proximal portion 44 is preferably located laterally inwardly (i.e. closer to the center plane of the bicycle 10) than the distal portion 46. Specifically, the proximal portion 44 includes a laterally outermost edge 44a and a laterally innermost edge 44b. The laterally innermost edge 44b is located laterally inwardly of the entire distal portion 46.

The distal portion 46 is coupled to the proximal portion 44 through the intermediate portion 48. Thus, the distal portion 46 extends from the proximal portion 44. The term "extend from" or "extending from", as used herein, encompass configurations in which an element directly extends from another element; configurations in which an element extends from another element through intermediate member(s) located therebetween; configurations in which a part of an element directly extends from another part of the element; and configurations in which a part of an element extends from another part of the element through intermediate part(s) of the element located therebetween. The intermediate portion 48 has a bent configuration such that the distal portion 46 is located laterally outwardly of the proximal portion 44. Specifically, the distal portion 46 of the brake control lever 32 extends in a substantially linear direction away from the proximal portion 44. More specifically, the distal portion 46 has a distal center longitudinal axis X₂ that is centered along the distal portion 46 and that moves substantially along the brake operating plane P in an offset arrangement. In other words, the distal center longitudinal axis X₂ is preferably substantially parallel to and offset from the brake operating plane P and the proximal center longitudinal axis X₁.

Thus, the distal portion 44 is located laterally outwardly (i.e. further from the center plane of the bicycle 10) than the proximal portion 44. Specifically, the distal portion 46 includes a laterally outermost distal edge 46a and a laterally innermost distal edge 46b. The laterally outermost distal edge 46a is located laterally outwardly of the entire proximal portion 44.

According to the invention, the laterally outermost distal edge 46a of the distal portion 46 is located laterally outwardly from the laterally outermost proximal edge 44a of the proximal portion 44 as measured perpendicularly relative to the brake operating plane P. Moreover, the laterally innermost distal edge 46b of the distal portion 46 is located laterally outwardly from the laterally innermost proximal edge 44b of the proximal portion 44 as measured perpendicularly relative to the brake operating plane P. These arrangements are maintained regardless of whether the brake control lever 32 is positioned in the braking position or the rest position.

In a preferable embodiment, the outermost distal edge 46a of the distal portion 46 is not located laterally outwardly of the lever bracket 30. Specifically, the outer side wall surface 30b of the brake lever bracket 30 has a laterally outermost edge that lies in an outermost plane O, which is parallel to the brake operating plane P. Preferably, the outermost distal edge 46a of the distal portion 46 is not located laterally outwardly from the outermost plane O of the lever bracket 30, as measured perpendicularly relative to the braking plane P. In this embodiment, the outermost distal edge 46a is located laterally inwardly of the outermost plane O of the lever bracket 30. However, optionally, the outermost distal edge 46a of the distal portion 46 can be aligned with the outermost bracket surface of the brake lever bracket 30 as measured perpendicularly relative to the brake operating plane P.

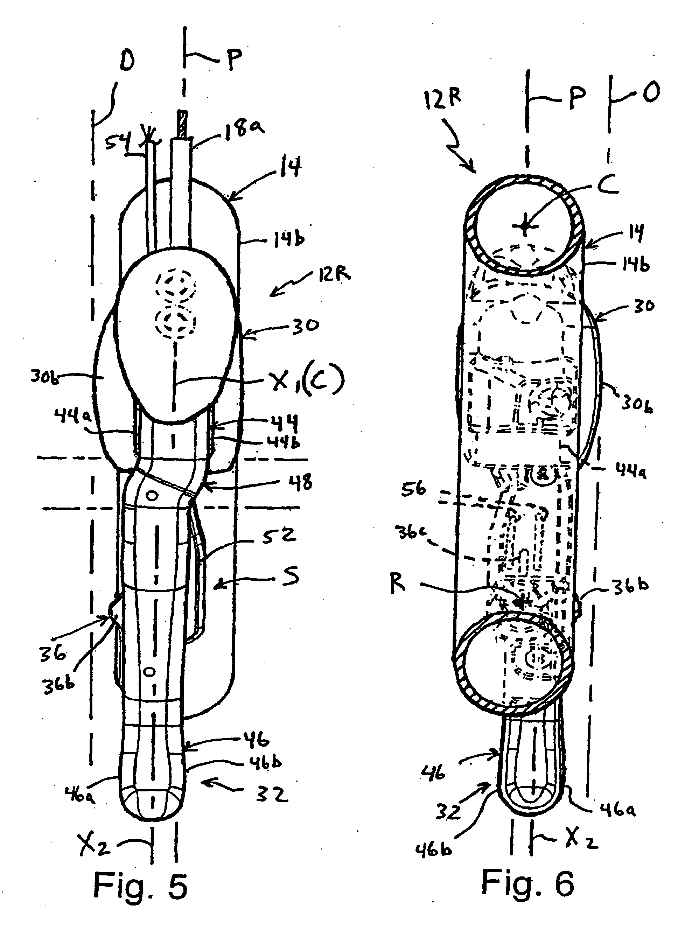

Referring to Figures 5, 7, and 8, the proximal portion 44 preferably has a longitudinal length longer than the longitudinal length of the intermediate portion 48. Moreover, the distal portion 46 preferably has a longitudinal length longer than each of the proximal portion 44 and the intermediate portion 48. More preferably, the distal portion 46 has a longitudinal length larger than the sum of the longitudinal lengths of the proximal portion 44 and the intermediate portion 48. However, it will be apparent to those skilled in the art from this disclosure that various other lengths are possible as discussed below with reference to other preferred embodiments of the present invention. The proximal portion 44, the distal portion 46 and the intermediate portion 48 are separated by phantom lines in Figures 5, 7 and 8 for the purpose of illustration.

Referring again to Figures 2-12, the electrical switch S is fixedly coupled to the distal portion 46 and the intermediate portion 48 of the brake control lever 32 via a pair of screws 50. In particular, the electrical switch S includes a switch housing 52 that is fixedly attached to the distal portion 46 and the intermediate portion 48 of the brake control lever 32 via the screws 50. The electrical operating member 36 is pivotally coupled to the switch housing 52 for rotation about an axis R from a rest position (Figures 2-10) to two different actuating positions (Figures 11 and 12). Thus, the electrical operating member 36 moves substantially along the brake operating plane P with the brake control lever 32 when the brake control lever 32 is pivoted about the brake pivot axis A between the braking position and the rest position along the brake operating plane P. The rotation axis R is preferably aligned with or located slightly laterally outwardly from the brake operating plane P and the proximal center longitudinal axis X₁.

Preferably, the electrical switch housing 52 is mounted to the rearward facing surface of the brake control lever 32. Moreover, the electrical operating member 36 is preferably mounted to the rearward surface of the electrical switch housing 52 such that the rider can operate the electrical operating member 36 using a finger or a thumb. Specifically, the electrical operating member 36 includes a mounting portion 36a, a rider engagement portion 36b located laterally outwardly from the mounting portion 36a, and an electrical contact portion 36c. The mounting portion 36a, the rider engagement portion 36b and the electrical contact portion 36c rotate together about the rotation axis R.

The mounting portion 36a is preferably thinner than the rider engagement portion 36b as measured along the rotation axis R. Moreover, the rider engagement portion 36b of the electrical operating member is preferably spaced laterally outwardly from the brake operating plane P (i.e. the centerline C) as measured perpendicularly relative to the brake operating plane P. Such an arrangement prevents undesirable contact (i.e. damage or undesirable shifting) of the electrical operating member 36 with the mounting portion 14b of the handlebar 14 when the bracket control lever is moved to the braking position, as best understood from Figures 5-12 because the rider engagement portion 36b will not contact the handlebar 14 unexpectedly.

However, the rider engagement portion 36b is also preferably located laterally inwardly of the outermost plane O of the lever bracket 30 (i.e., between the handlebar centerline C of the mounting portion 14b of the handlebar 14 and a laterally outermost bracket surface of the brake lever bracket 30) as measured perpendicularly relative to the brake operating plane P. This arrangement protects the electrical operating member 36 from damage or undesirable shifting in the event that the bicycle 10 should fall over on its side. Preferably, a majority of the rider engagement portion 36b of the electrical operating member 36 is positioned between the handlebar centerline C of the mounting portion 14b of the handlebar 14 and a laterally outermost handlebar surface of the mounting portion 14b of the handlebar 14 when the brake control lever 32 is moved from the rest position to the braking position, as best understood from Figures 5, 6, 9 and 10.

The electrical switch S includes an internal mechanism (not shown in detail) with a pair of electrical contacts 56, which sends electrical shift signals to the cycle computer 24 when the electrical contact portion 36c of the electrical operating member 36 contacts either of the electrical contacts 56 in a conventional manner. Thus, when the electrical operating member 36 is moved to its shift (actuating) positions illustrated in Figures 11 and 12, electrical signals are sent through the electrical cord 54. The internal structure (not shown in detail) of the electrical switch S is conventional and known in the art. Moreover, the internal structure (not shown in detail) of the electrical switch S is not critical to the present invention. Accordingly, the internal structure (not shown in detail) of the electrical switch S will not be discussed and/or illustrated in detail herein. An example of a conventional internal structure of an electrical switch for a bicycle that can be used in the switch S in accordance with the present invention is disclosed in U.S. Patent Application No. 10/721,070, which was filed on November 26, 2003, and assigned to Shimano, Inc.

### SECOND EMBODIMENT

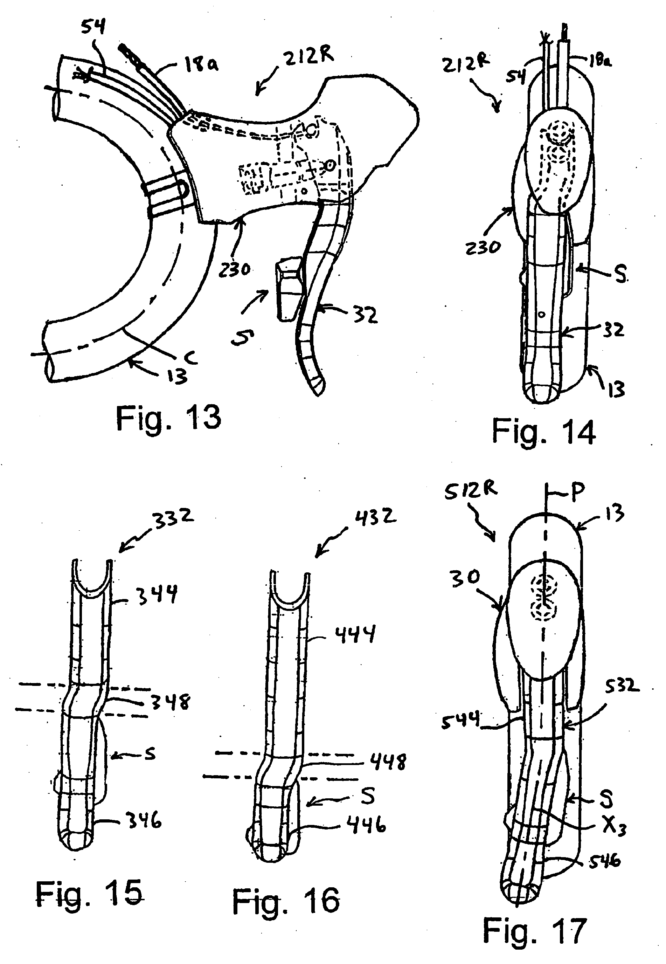

Referring now to Figures 13 and 14, a modified brake control device 212R in accordance with a second embodiment will now be explained. The second embodiment is identical to the first embodiment, except the control device 212R includes a modified brake lever bracket 230. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity. However, it will be apparent to those skilled in the art from this disclosure that the descriptions and illustrations of the first embodiment also apply to this second embodiment, except as otherwise explained and illustrated herein.

The modified brake lever bracket 230 in this second embodiment is arranged and configured to house (enclose) more of the brake control lever 32 than in the first embodiment. Specifically, the modified brake lever bracket 230 in this second embodiment is arranged and configured such that at least a majority of the intermediate portion 48 of the brake control lever 32 is located within the brake lever bracket 230.

### THIRD EMBODIMENT

Referring now to Figure 15, a modified brake control lever 332 in accordance with a third embodiment will now be explained. The brake control lever 332 is designed to be used in the control device 12R of the first embodiment in place of the brake control lever 32 of the first embodiment. The modified brake control lever 332 is identical to the brake control lever 32, except for the lengths of the various sections, as explained below. In view of the similarity between the first and third embodiments, the parts of the third embodiment that are identical to the parts of the first embodiment will be given the same reference numerals as the parts of the first embodiment. Moreover, the descriptions of the parts of the third embodiment that are identical to the parts of the first embodiment may be omitted for the sake of brevity. However, it will be apparent to those skilled in the art from this disclosure that the descriptions and illustrations of the first embodiment also apply to this third embodiment, except as otherwise explained and illustrated herein.

More specifically, the modified brake control lever 332 basically includes a modified proximal portion 344, a modified distal portion 346 and an intermediate portion 348. In this embodiment, the distal portion 346 has a longitudinal length about the same as the longitudinal length of the proximal portion 344. Thus, the intermediate portion 348 is substantially longitudinally centrally located in the brake control lever 332.

### FOURTH EMBODIMENT

Referring now to Figure 16, a modified brake control lever 432 in accordance with a fourth embodiment will now be explained. The brake control lever 432 is designed to be used in the control device 12R of the first embodiment in place of the brake control lever 32 of the first embodiment. The modified brake control lever 432 is identical to the brake control lever 32, except for the lengths of the various sections, as explained below. In view of the similarity between the first and fourth embodiments, the parts of the fourth embodiment that are identical to the parts of the first embodiment will be given the same reference numerals as the parts of the first embodiment. Moreover, the descriptions of the parts of the fourth embodiment that are identical to the parts of the first embodiment may be omitted for the sake of brevity. However, it will be apparent to those skilled in the art from this disclosure that the descriptions and illustrations of the first embodiment also apply to this fourth embodiment, except as otherwise explained and illustrated herein.

More specifically, the modified brake control lever 432 basically includes a modified proximal portion 444, a modified distal portion 446 and an intermediate portion 448. In this embodiment, the distal portion 446 has a longitudinal length smaller than the longitudinal length of the proximal portion 444. Thus, the intermediate portion 448 is located closer to the free end of the brake control lever 432.

### FIFTH EMBODIMENT

Referring now to Figure 17, a modified brake control device 512R in accordance with a fifth embodiment will now be explained. The fifth embodiment is identical to the first embodiment, except the control device 512R includes a modified brake control lever 532. In view of the similarity between the first and fifth embodiments, the parts of the fifth embodiment that are identical to the parts of the first embodiment will be given the same reference numerals as the parts of the first embodiment. Moreover, the descriptions of the parts of the fifth embodiment that are identical to the parts of the first embodiment may be omitted for the sake of brevity. However, it will be apparent to those skilled in the art from this disclosure that the descriptions and illustrations of the first embodiment also apply to this fifth embodiment, except as otherwise explained and illustrated herein.

More specifically, the modified brake control lever 532 basically includes a modified proximal portion 544 and a modified distal portion 546 that is inclined relative to the proximal portion. The intermediate portion 48 of the first embodiment is eliminated in this fifth embodiment. In this embodiment, the distal portion 546 about the same as the longitudinal length of the proximal portion 544. Other than the length of the proximal portion 544, the proximal portion 544 is identical to the first embodiment. Similarly, the distal portion 546 is substantially identical to the first embodiment, but shorter and inclined. Due to this arrangement, an outermost distal edge 546a of the distal portion 546 is substantially aligned with the outermost bracket surface of the brake lever bracket 30 as measured perpendicularly relative to the braking plane P. Moreover, due to this arrangement, the distal portion 546 has a distal center longitudinal axis X₃ that is inclined relative to the braking plane P such that the distal center longitudinal axis X₃ moves in a frustaconical direction when the brake control lever 532 is moved from the rest position to the braking position.

### SIXTH EMBODIMENT

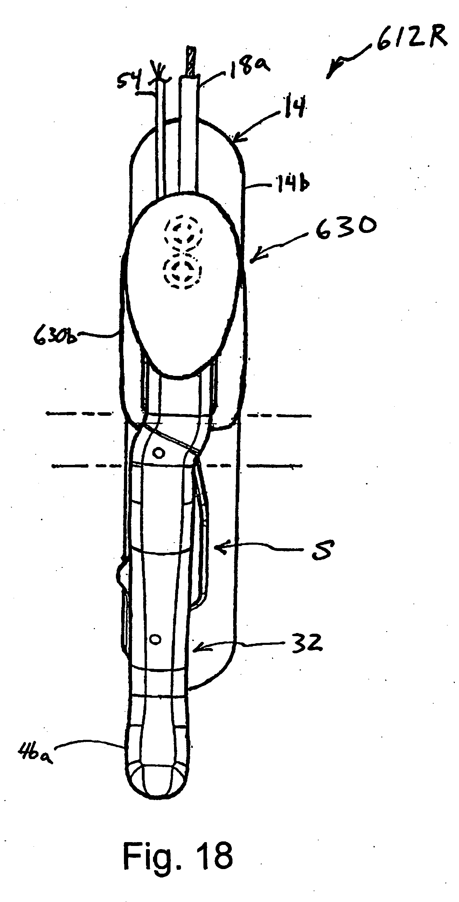

Referring now to Figure 18, a modified brake control device 612R in accordance with a sixth embodiment will now be explained. The sixth embodiment is identical to the first embodiment, except the control device 612R includes a modified brake lever bracket 630. In view of the similarity between the first and sixth embodiments, the parts of the sixth embodiment that are identical to the parts of the first embodiment will be given the same reference numerals as the parts of the first embodiment. Moreover, the descriptions of the parts of the sixth embodiment that are identical to the parts of the first embodiment may be omitted for the sake of brevity. However, it will be apparent to those skilled in the art from this disclosure that the descriptions and illustrations of the first embodiment also apply to this sixth embodiment, except as otherwise explained and illustrated herein.

The modified brake lever bracket 230 in this second embodiment is arranged and configured to such that a laterally outermost edge of its outer surface 630b is substantially aligned with the outermost distal edge 46a of the brake control lever 32. In this embodiment, the external shape of the brake lever bracket 630 has been modified (i.e. to be narrower) such that the laterally outermost edge of the outer surface 630b is substantially aligned with the laterally outermost edge of the mounting portion 14b of the handlebar 14. However, it will be apparent to those skilled in the art from this disclosure that the internal structure of the brake lever bracket 30 of the first embodiment could be modified instead of the external shape (e.g. as in this sixth embodiment) such that the brake control lever 32 is mounted laterally outwardly of its position in the first embodiment to be substantially aligned with the outermost edge of the brake lever bracket.

As used herein, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A bicycle brake control device (12R, 12L), comprising:
a brake lever bracket (30) configured and arranged to be fixedly attachable to a mounting portion (14b) of a bicycle handlebar (14) with a handlebar centerline (C) extending through the mounting portion (14b), the brake lever bracket (30) comprising a gripping body (40) and a band clamp (42) to clamp around the mounting portion (14b) of the handlebar (14), the band clamp (42) defining a clamp axis to coincide with the handlebar centerline (C) of the mounting portion (14b) of the handlebar (14) when clamped thereto;
a brake control lever (32) pivotally coupled to the gripping body (40) about a pivot pin (41) with a pivot axis (A), the brake control lever (32) configured to move from a rest position along a braking plane (P) to a braking position about the pivot axis (A), wherein the braking plane (P) is perpendicular to the pivot axis (A) and substantially coincides with the clamp axis of the band clamp (42), the brake control lever (32) including a proximal portion (44) pivotally coupled to the brake lever bracket (30) and a distal portion (46) extending from the proximal portion (44);
and
an electrical operating member (32) movably coupled to the distal portion (46) of the brake control lever (32) to electrically operate a bicycle component, the electrical operating member (36) including a mounting portion (36a) and a rider engagement portion (36b) rotating together about a rotating axis (R) aligned with or located slightly laterally outwardly from the braking plane (P),
wherein the rider engagement portion (36b) of the electrical operating member (36) is located laterally outwardly from the mounting portion (36a) of the electrical operating member (36) and is spaced laterally outwardly from the braking plane (P)
as measured perpendicularly relative to the braking plane (P) when the brake control lever (32) is positioned in the braking position,
**characterized in that** the distal portion (46) of the brake control lever (32) has a laterally outermost distal edge (46a) located laterally outwardly from a laterally outermost proximal edge (44a) of the proximal portion (44) as measured perpendicularly relative to the braking plane (P),
and the mounting portion (36a) of the electrical operating member (36) is thinner than the rider engagement portion (36b) as measured along the rotational axis (R).

2. The bicycle brake control device (12R, 12L; 212R, 512R, 612R) according to claim 1, wherein
the outermost distal edge (46a, 546a) of the distal portion (46, 346, 446, 546) is not located laterally outwardly from a laterally outermost bracket surface of the brake lever bracket (30, 230, 630) as measured perpendicularly relative to the braking plane (P).

3. The bicycle brake control device (12R, 12L; 212R, 512R, 612R) according to claim 1 or 2, wherein
the outermost distal edge (46a, 546a) of the distal portion (46, 346, 446, 546) is substantially aligned with the outermost bracket surface of the brake lever bracket (30, 230, 630) as measured perpendicularly relative to the braking plane (P).

4. The bicycle brake control device (12R, 12L; 212R, 512R, 612R) according to any of the preceding claims, wherein
the proximal portion (44, 344, 444, 544) extends in a substantially linear direction along the braking plane (P).

5. The bicycle brake control device (12R, 12L; 212R, 512R, 612R) according to claim 1 or 4, wherein
the distal portion (46, 346, 446, 546) extends in a substantially linear direction away from the proximal portion (44, 344, 444, 544).

6. The bicycle brake control device (12R, 12L; 212R, 512R, 612R) according to claim 4 or 5, wherein
the brake control lever (32, 332, 432, 532) includes an intermediate portion (48, 348, 448) arranged between the distal portion (46, 346, 446, 546) and the proximal portion (44, 344, 444, 544) that has a shape configured to position the distal portion (46, 346, 446, 546) laterally outwardly from the proximal portion (44, 344, 444, 544).

7. The bicycle brake control device (12R, 12L; 212R, 512R, 612R) according to claim 6, wherein
the intermediate portion (48, 348, 448) is bent such that the distal portion (46, 346, 446, 546) is substantially parallel to and offset from the proximal portion (44, 344, 444, 544).

8. The bicycle brake control device (12R, 12L; 212R, 512R, 612R) according to claim 4 or 5, wherein
the distal portion (46, 346, 446, 546) is inclined relative to the proximal portion (44, 344, 444, 544).

9. The bicycle brake control device (12R, 12L; 212R, 512R, 612R) according to any of the preceding claims, wherein
the proximal portion (44, 344, 444, 544) has a proximal center longitudinal axis that moves along the braking plane (P), and the braking plane (P) is substantially coincident with the centerline (C) of the mounting portion (14b, 14c) of the handlebar (14).

10. The bicycle brake control device (12R, 12L; 212R, 512R, 612R) according to any of the preceding claims, wherein
the proximal portion (44, 344, 444, 544) and the distal portion (46, 346, 446, 546) of the brake control lever (32, 332, 432, 532) are integrally formed together as a one-piece, unitary member.

11. The bicycle brake control device (12R, 12L; 212R, 512R, 612R) according to any of the preceding claims, wherein
the braking plane (P) is perpendicular to the pivot axis (A) and substantially aligned with a proximal center longitudinal axis of the proximal portion (44, 344, 444, 544).

12. The bicycle brake control device (12R, 12L; 212R, 512R, 612R) according to any of the preceding claims, wherein
the distal portion (46, 346, 446, 546) has a distal center longitudinal axis (x₂) that moves along a plane that is substantially parallel to and offset from the braking plane (P) when the brake control lever (32, 332, 432, 532) is moved from the rest position to the braking position.

13. The bicycle brake control device (12R, 12L; 212R, 512R, 612R) according to claim 11, wherein
the distal portion (546) has a distal center longitudinal axis (x₃) that is inclined relative to the braking plane (P) such that the distal center longitudinal axis (x₃) moves in a frustaconical direction when the brake control lever (532) is moved from the rest position to the braking position.

14. The bicycle brake control device (12R, 12L; 212R, 512R, 612R) according to any of claims 1 to 12, wherein
at least a majority of the proximal portion (44, 344, 444, 544) is located within the brake lever bracket (30, 230, 630).

15. The bicycle brake control device (12R, 12L; 212R, 512R, 612R) according to any of claims 6 to 12, wherein
at least a majority of the intermediate portion (48, 348, 448) is located within the brake lever bracket (30, 230, 630).

16. The bicycle brake control device (12R, 12L; 212R, 512R, 612R) according to claim 15, wherein
the intermediate portion (48, 348, 448) has a longitudinal length smaller than a longitudinal length of the distal portion (46, 346, 446, 546).

17. The bicycle brake control device (12R, 12L; 212R, 512R, 612R) according to claim 15 or 16, wherein
the longitudinal length of the intermediate portion (48, 348, 448) is smaller than a longitudinal length of the proximal portion (44, 344, 444, 544).

18. The bicycle brake control device (12R, 12L; 212R, 512R, 612R) according to claim 17, wherein
the longitudinal length of the proximal portion (44, 344, 444, 544) is smaller than the longitudinal length of the distal portion (46, 346, 446, 546).

19. The bicycle brake control device (12R, 12L; 212R, 512R, 612R) according to claim 15, wherein
the proximal portion (44, 344, 444, 544), the distal portion (46, 346, 446, 546) and the intermediate portion (48, 348, 448) of the brake control lever (32, 332, 432, 532) are integrally formed together as a one-piece, unitary member.

20. The bicycle brake control device (12R, 12L; 212R, 512R, 612R) according to claim 1, wherein
the rider engagement portion (36b) of the electrical operating member (36) is positioned between the handlebar centerline (C) of the mounting portion (14b, 14c) of the handlebar (14) and a laterally outermost bracket surface of the brake lever bracket (30, 230, 630) as measured perpendicularly relative to the braking plane (P).

21. The bicycle brake control device (12R, 12L; 212R, 512R, 612R) according to claim 1, wherein
a majority of the rider engagement portion (36b) of the electrical operating member (36) is positioned between the handlebar centerline (C) of the mounting portion (14b, 14c) of the handlebar (14) and a laterally outermost handlebar surface of the mounting portion of the handlebar (14) when the brake control lever (32, 332, 432, 532) is moved from the rest position to the braking position.

22. The bicycle brake control device (12R, 12L; 212R, 512R, 612R) according to claim 1, wherein
the distal portion (46, 346, 446, 546) has a longitudinal length larger than a longitudinal length of the proximal portion (44, 344, 444, 544).

23. The bicycle brake control device (12R, 12L; 212R, 512R, 612R) according to claim 1, wherein
the distal portion (46, 346, 446, 546) has a longitudinal length smaller than a longitudinal length of the proximal portion (44, 344, 444, 544).

24. The bicycle brake control device (12R, 12L; 212R, 512R, 612R) according to claim 1, wherein
the distal portion (46, 346, 446, 546) has a longitudinal length about the same as a longitudinal length of the proximal portion (44, 344, 444, 544).

25. The bicycle brake control device (12R, 12L; 212R, 512R, 612R) according to claim 1, wherein
the electrical operating member (36) is part of an electrical shift control switch.

26. The bicycle brake control device (12R, 12L; 212R, 512R, 612R) according to claim 1, wherein
the electrical operating member (36) is rotatable relative to the brake control lever (32, 332, 432, 532).

## Patentansprüche

1. Fahrradschaltsteuervorrichtung (12R, 12L), aufweisend:
einen Bremshebelbeschlag (30), der konfiguriert und angeordnet ist, damit er an einem Befestigungsabschnitt (14b) einer Fahrradlenkstange (14) fest angebracht werden kann, wobei eine Lenkstangen-Mittellinie (C) sich durch den Befestigungsabschnitt (14b) hindurch erstreckt, wobei der Bremshebelbeschlag (30) einen Greifkörper (40) und eine Bandklemme (42) aufweist, um um den Befestigungsabschnitt (14b) der Lenkstange (14) herum festgeklemmt zu werden, wobei die Bandklemme (42) eine Klemmachse definiert, um mit der Lenkstangen-Mittellinie (C) des Befestigungsabschnittes (14b) der Lenkstange (14) übereinzustimmen, wenn sie an dieser festgeklemmt ist;
einen Bremssteuerhebel (32), der mit dem Greifkörper (40) um einen Schwenkstift (41) mit einer Schwenkachse (A) schwenkbar verbunden ist, wobei der Bremssteuerhebel (32) konfiguriert ist, um sich aus einer Ruheposition entlang einer Bremsebene (P) in eine Bremsposition um die Schwenkachse (A) zu bewegen, wobei die Bremsebene (P) senkrecht zur Schwenkachse (A) ist und im Wesentlichen mit der Klemmachse der Bandklemme (42) übereinstimmt, wobei der Bremssteuerhebel (32) einen proximalen Abschnitt (44), der mit dem Bremshebelbeschlag (30) schwenkbar verbunden ist, und einen distalen Abschnitt (46) beinhaltet, der sich vom proximalen Abschnitt (44) erstreckt; und
ein elektrisches Bedienelement (32), das mit dem distalen Abschnitt (46) des Bremssteuerhebels (32) bewegbar verbunden ist, um ein Fahrradbauteil elektrisch zu betreiben, wobei das elektrische Bedienelement (36) einen Befestigungsabschnitt (36a) und einen Fahrereingreifabschnitt (36b) beinhaltet, die gemeinsam um eine Drehachse (R) rotieren, die mit der Bremsebene (P) fluchtet oder sich geringfügig seitlich außerhalb von dieser befindet,
wobei der Fahrereingreifabschnitt (36b) des elektrischen Bedienelementes (36) sich seitlich außerhalb vom Befestigungsabschnitt (36a) des elektrischen Bedienelementes befindet und beabstandet seitlich nach außen von der Bremsebene (P) angeordnet ist
wie senkrecht relativ zur Bremsebene (P) gemessen, wenn sich der Bremssteuerhebel (32) in der Bremsposition befindet,
**dadurch gekennzeichnet, dass** der distale Abschnitt (46) des Bremssteuerhebels (32) eine seitlich ganz außen befindliche distale Kante (46a) aufweist, die sich seitlich nach außen von einer seitlich ganz außen befindlichen proximalen Kante (44a) des proximalen Abschnittes (44) befindet, wie senkrecht relativ zur Bremsebene (P) gemessen,
und der Befestigungsabschnitt (36a) des elektrischen Bedienelementes (36) dünner als der Fahrereingreifabschnitt (36b) ist, wie entlang der Drehachse (R) gemessen.

2. Fahrradbremssteuervorrichtung (12R, 12L; 212R, 512R, 612R) nach Anspruch 1, wobei
die ganz außen befindliche distale Kante (46a, 546a) des distalen Abschnittes (46, 346, 446, 546) sich nicht seitlich außerhalb von einer seitlich ganz außen befindlichen Beschlagfläche des Bremshebelbeschlages (30, 230, 630) befindet, wie senkrecht relativ zur Bremsebene (P) gemessen.

3. Fahrradbremssteuervorrichtung (12R, 12L; 212R, 512R, 612R) nach Anspruch 1 oder 2, wobei
die ganz außen befindliche distale Kante (46a, 546a) des distalen Abschnittes (46, 346, 446, 546) im Wesentlichen fluchtend zur ganz außen befindlichen Beschlagfläche des Bremshebelbeschlags (30, 230, 630) angeordnet ist, wie senkrecht relativ zur Bremsebene (P) gemessen.

4. Fahrradbremssteuervorrichtung (12R, 12L; 212R, 512R, 612R) nach einem der vorhergehenden Ansprüche, wobei
der proximale Abschnitt (44, 344, 444, 544) sich in einer im Wesentlichen linearen Richtung entlang der Bremsebene (P) erstreckt.

5. Fahrradbremssteuervorrichtung (12R, 12L; 212R, 512R, 612R) nach Anspruch 1 oder 4, wobei
der distale Abschnitt (46, 346, 446, 546) sich in einer im Wesentlichen linearen Richtung weg vom proximalen Abschnitt (44, 344, 444, 544) erstreckt.

6. Fahrradbremssteuervorrichtung (12R, 12L; 212R, 512R, 612R) nach Anspruch 4 oder 5, wobei
der Bremssteuerhebel (32, 332, 432, 532) einen Zwischenabschnitt (48, 348, 448) beinhaltet, der zwischen dem distalen Abschnitt (46, 346, 446, 546) und dem proximalen Abschnitt (44, 344, 444, 544) angeordnet ist, der eine Gestalt aufweist, die konfiguriert ist, um den distalen Abschnitt (46, 346, 446, 546) seitlich nach außen vom proximalen Abschnitt (44, 344, 444, 544) zu positionieren.

7. Fahrradbremssteuervorrichtung (12R, 12L; 212R, 512R, 612R) nach Anspruch 6, wobei
der Zwischenabschnitt (48, 348, 448) derart gekrümmt ist, dass der distale Abschnitt (46, 346, 446, 546) im Wesentlichen parallel und gegen den proximalen Abschnitt (44, 344, 444, 544) versetzt angeordnet ist.

8. Fahrradbremssteuervorrichtung (12R, 12L; 212R, 512R, 612R) nach Anspruch 4 oder 5, wobei
der distale Abschnitt (46, 346, 446, 546) relativ zum proximalen Abschnitt (44, 344, 444, 544) geneigt ist.

9. Fahrradbremssteuervorrichtung (12R, 12L; 212R, 512R, 612R) nach einem der vorhergehenden Ansprüche, wobei
der proximale Abschnitt (44, 344, 444, 544) eine proximale Mittellängsachse aufweist, die sich entlang der Bremsebene (P) bewegt, und die Bremsebene (P) im Wesentlichen mit der Mittellinie (C) des Befestigungsabschnittes (14b, 14c) der Lenkstange (14) übereinstimmt.

10. Fahrradbremssteuervorrichtung (12R, 12L; 212R, 512R, 612R) nach einem der vorhergehenden Ansprüche, wobei
der proximale Abschnitt (44, 344, 444, 544) und der distale Abschnitt (46, 346, 446, 546) des Bremssteuerhebels (32, 332, 432, 532) integral miteinander als einstückiges unitäres Element ausgebildet sind.

11. Fahrradbremssteuervorrichtung (12R, 12L; 212R, 512R, 612R) nach einem der vorhergehenden Ansprüche, wobei
die Bremsebene (P) senkrecht zur Schwenkachse (A) ist und im Wesentlichen fluchtend mit einer proximalen Mittellängsachse des proximalen Abschnitts (44, 344, 444, 544) angeordnet ist.

12. Fahrradbremssteuervorrichtung (12R, 12L; 212R, 512R, 612R) nach einem der vorhergehenden Ansprüche, wobei
der distale Abschnitt (46, 346, 446, 546) eine distale Mittellängsachse (x₂) aufweist, die sich entlang einer Ebene bewegt, welche im Wesentlichen parallel zur Bremsebene (P) ist und gegen diese versetzt ist, wenn der Bremssteuerhebel (32, 332, 432, 532) aus der Ruheposition in die Bremsposition bewegt wird.

13. Fahrradbremssteuervorrichtung (12R, 12L; 212R, 512R, 612R) nach Anspruch 11, wobei
der distale Abschnitt (546) eine distale Mittellängsachse (x₃) aufweist, die relativ zur Bremsebene (P) geneigt ist, derart, dass sich die distale Mittellängsachse (x₃) in einer kegelstumpfförmigen Richtung bewegt, wenn der Bremssteuerhebel (532) aus der Ruheposition in die Bremsposition bewegt wird.

14. Fahrradbremssteuervorrichtung (12R, 12L; 212R, 512R, 612R) nach einem der Ansprüche 1 bis 12, wobei
zumindest ein überwiegender Teil des proximalen Abschnittes (44, 344, 444, 544) sich innerhalb des Bremshebelbeschlags (30, 230, 630) befindet.

15. Fahrradbremssteuervorrichtung (12R, 12L; 212R, 512R, 612R) nach einem der Ansprüche 6 bis 12, wobei
zumindest ein überwiegender Teil des Zwischenabschnittes (48, 348, 448) sich innerhalb des Bremshebelbeschlags (30, 230, 630) befindet.

16. Fahrradbremssteuervorrichtung (12R, 12L; 212R, 512R, 612R) nach Anspruch 15, wobei
der Zwischenabschnitt (48, 348, 448) eine Längsrichtungslänge hat, die kleiner als eine Längsrichtungslänge des distalen Abschnittes (46, 346, 446, 546) ist.

17. Fahrradbremssteuervorrichtung (12R, 12L; 212R, 512R, 612R) nach Anspruch 15 oder 16, wobei
die Längsrichtungslänge des Zwischenabschnittes (48, 348, 448) kleiner als eine Längsrichtungslänge des proximalen Abschnittes (44, 344, 444, 544) ist.

18. Fahrradbremssteuervorrichtung (12R, 12L; 212R, 512R, 612R) nach Anspruch 17, wobei
die Längsrichtungslänge des proximalen Abschnittes (44, 344, 444, 544) kleiner als die Längsrichtungslänge des distalen Abschnittes (46, 346, 446, 546) ist.

19. Fahrradbremssteuervorrichtung (12R, 12L; 212R, 512R, 612R) nach Anspruch 15, wobei
der proximale Abschnitt (44, 344, 444, 544), der distale Abschnitt (46, 346, 446, 546) und der Zwischenabschnitt (48, 348, 448) des Bremssteuerhebels (32, 332, 432, 532) integral miteinander als einstückiges unitäres Element ausgebildet sind.

20. Fahrradbremssteuervorrichtung (12R, 12L; 212R, 512R, 612R) nach Anspruch 1, wobei
der Fahrereingreifabschnitt (36b) des elektrischen Bedienelementes (36) zwischen der Lenkstangen-Mittellinie (C) des Befestigungsabschnittes (14b, 14c) der Lenkstange (14) und einer seitlich ganz außen befindlichen Beschlagfläche des Bremshebelbeschlags (30, 230, 630) positioniert ist, wie senkrecht relativ zur Bremsebene (P) gemessen.

21. Fahrradbremssteuervorrichtung (12R, 12L; 212R, 512R, 612R) nach Anspruch 1, wobei
ein überwiegender Teil des Fahrereingreifabschnittes (36b) des elektrischen Bedienelementes (36) zwischen der Lenkstangen-Mittellinie (C) des Befestigungsabschnittes (14b, 14c) der Lenkstange (14) und einer seitlich ganz außen befindlichen Lenkstangenfläche des Befestigungsabschnittes der Lenkstange (14) positioniert ist, wenn der Bremssteuerhebel (32, 332, 432, 532) aus der Ruheposition in die Bremsposition bewegt wird.

22. Fahrradbremssteuervorrichtung (12R, 12L; 212R, 512R, 612R) nach Anspruch 1, wobei
der distale Abschnitt (46, 346, 446, 546) eine Längsrichtungslänge aufweist, die größer als eine Längsrichtungslänge des proximalen Abschnittes (44, 344, 444, 546) ist.

23. Fahrradbremssteuervorrichtung (12R, 12L; 212R, 512R, 612R) nach Anspruch 1, wobei
der distale Abschnitt (46, 346, 446, 546) eine Längsrichtungslänge aufweist, die kleiner als eine Längsrichtungslänge des proximalen Abschnittes (44, 344, 444, 546) ist.

24. Fahrradbremssteuervorrichtung (12R, 12L; 212R, 512R, 612R) nach Anspruch 1, wobei
der distale Abschnitt (46, 346, 446, 546) eine Längsrichtungslänge aufweist, die ungefähr gleich groß wie eine Längsrichtungslänge des proximalen Abschnittes (44, 344, 444, 546) ist.

25. Fahrradbremssteuervorrichtung (12R, 12L; 212R, 512R, 612R) nach Anspruch 1, wobei
das elektrische Bedienelement (36) Teil eines elektrischen Schaltsteuerschalters ist.

26. Fahrradbremssteuervorrichtung (12R, 12L; 212R, 512R, 612R) nach Anspruch 1, wobei
das elektrische Bedienelement (36) drehbar relativ zum Bremssteuerhebel (32, 332, 432, 532) ist.

## Revendications

1. Dispositif de commande de freinage de bicyclette (12R, 12L), comprenant :
un support de levier de frein (30) configuré et agencé pour être fixement attachable à une portion de montage (14b) d'un guidon de bicyclette (14) avec un axe central de guidon (C) s'étendant à travers la portion de montage (14b), le support de levier de frein (30) comprenant un corps de préhension (40) et un collier à bande (42) pour enserrer la portion de montage (14b) du guidon (14), le collier à bande (42) définissant un axe de collier afin de coïncider avec l'axe central du guidon (C) de la portion de montage (14b) du guidon (14) quand il y est fixé ;
un levier de commande de frein (32) couplé avec faculté de pivotement au corps de préhension (40) autour d'une broche de pivotement (41) avec un axe de pivotement (A), le levier de commande de frein (32) configuré pour se déplacer d'une position de repos le long d'un plan de freinage (P) à une position de freinage autour de l'axe de pivotement (A), dans lequel le plan de freinage (P) est perpendiculaire à l'axe de pivotement (A) et coïncide sensiblement avec l'axe de collier du collier à bande (42), le levier de commande de frein (32) comprenant une portion proximale (44) couplée avec faculté de pivotement au support de levier de frein (30) et une portion distale (46) s'étendant depuis la portion proximale (44) ;
et
un organe d'actionnement électrique (36) couplé avec faculté de déplacement à la portion distale (46) du levier de commande de frein (32) afin d'actionner électriquement un composant de bicyclette, l'organe d'actionnement électrique (36) comprenant une portion de montage (36a) et une portion par enclenchement par le cycliste (36b) tournant ensemble autour d'un axe de rotation (R) aligné avec ou situé vers l'extérieur légèrement latéralement depuis le plan de freinage (P),
dans lequel la portion par enclenchement par le cycliste (36b) de l'organe d'actionnement électrique (36) est située vers l'extérieur latéralement à partir de la portion de montage (36a) de l'organe d'actionnement électrique (36) et est espacée vers l'extérieur latéralement du plan de freinage (P),
telle que mesurée perpendiculairement par rapport au plan de freinage (P) lorsque le levier de commande de frein (32) est positionné dans la position de freinage,
**caractérisé en ce que** la portion distale (46) du levier de commande de frein (32) comprend un bord distal le plus à l'extérieur latéralement (46a) situé vers l'extérieur latéralement à partir d'un bord proximal le plus à l'extérieur latéralement (44a) de la portion proximale (44) tel que mesuré perpendiculairement par rapport au plan de freinage (P),
et la portion de montage (36a) de l'organe d'actionnement électrique (36) est plus fine que la portion par enclenchement par le cycliste (36b) telle que mesurée le long de l'axe de rotation (R).

2. Dispositif de commande de freinage de bicyclette (12R, 12L ; 212R, 512R, 612R) selon la revendication 1, dans lequel
le bord distal le plus à l'extérieur (46a, 546a) de la portion distale (46, 346, 446, 546) n'est pas situé vers l'extérieur latéralement à partir d'une surface de support la plus à l'extérieur latéralement du support de levier de frein (30, 230, 630) tel que mesuré perpendiculairement par rapport au plan de freinage (P).

3. Dispositif de commande de freinage de bicyclette (12R, 12L ; 212R, 512R, 612R) selon la revendication 1 ou 2, dans lequel
le bord distal le plus extérieur (46, 546a) de la portion distale (46, 346, 446, 546) est sensiblement aligné avec la surface de support la plus extérieure du support de levier de frein (30, 230, 630) tel que mesuré perpendiculairement par rapport au plan de freinage (P).

4. Dispositif de commande de freinage de bicyclette (12R, 12L; 212R, 512R, 612R) selon l'une quelconque des revendications précédentes, dans lequel
la portion proximale (44, 344, 444, 544) s'étend dans une direction sensiblement linéaire le long du plan de freinage (P).

5. Dispositif de commande de freinage de bicyclette (12R, 12L ; 212R, 512R, 612R) selon la revendication 1 ou 4, dans lequel
la portion distale (46, 346, 446, 546) s'étend dans une direction sensiblement linéaire en éloignement de la portion proximale (44, 344, 444, 544).

6. Dispositif de commande de freinage de bicyclette (12R, 12L ; 212R, 512R, 612R) selon la revendication 4 ou 5, dans lequel
le levier de commande de frein (32, 332, 432, 532) comprend une portion intermédiaire (48, 348, 448) agencée entre la portion distale (46, 346, 446, 556) et la portion proximale (44, 344, 444, 544) qui a une forme configurée pour positionner la portion distale (46, 346, 446, 546) vers l'extérieur latéralement à partir de la portion proximale (44, 344, 444, 544).

7. Dispositif de commande de freinage de bicyclette (12R, 12L ; 212R, 512R, 612R) selon la revendication 6, dans lequel
la portion intermédiaire (48, 348, 448) est courbée de sorte que la portion distale (46, 346, 446, 546) est sensiblement parallèle à et décalée par rapport à la portion proximale (44, 344, 444, 544).

8. Dispositif de commande de freinage de bicyclette (12R, 12L ; 212R, 512R, 612R) selon la revendication 4 ou 5, dans lequel
la portion distale (46, 346, 446, 546) est inclinée par rapport à la portion proximale (44,344,444,544).

9. Dispositif de commande de freinage de bicyclette (12R, 12L ; 212R, 512R, 612R) selon l'une quelconque des revendications précédentes, dans lequel
la portion proximale (44, 344, 444, 544) a un axe longitudinal de centre proximal qui se déplace le long du plan de freinage (P), et le plan de freinage (P) coïncide sensiblement avec l'axe central (C) de la portion de montage (14b, 14c) du guidon (14).

10. Dispositif de commande de freinage de bicyclette (12R, 12L ; 212R, 512R, 612R) selon l'une quelconque des revendications précédentes, dans lequel
la portion proximale (44, 344, 444, 544) et la portion distale (46, 346, 446, 546) du levier de commande de frein (32, 332, 432, 532) sont formées solidairement ensemble comme un organe unitaire en une pièce.

11. Dispositif de commande de freinage de bicyclette (12R, 12L ; 212R, 512R, 612R) selon l'une quelconque des revendications précédentes, dans lequel
le plan de freinage (P) est perpendiculaire à l'axe de pivotement (A) et sensiblement aligné avec un axe longitudinal de centre proximal de la portion proximale (44, 344, 444, 544).

12. Dispositif de commande de freinage de bicyclette (12R, 12L ; 212R, 512R, 612R) selon l'une quelconque des revendications précédentes, dans lequel
la portion distale (46, 346, 446, 546) a un axe longitudinal de centre distal (x₂) qui se déplace le long d'un plan qui est sensiblement parallèle à et décalé par rapport au plan de freinage (P) lorsque le levier de commande de frein (32, 332, 432, 532) est déplacé de la position de repos à la position de freinage.

13. Dispositif de commande de freinage de bicyclette (12R, 12L ; 212R, 512R, 612R) selon la revendication 11, dans lequel
la portion distale (546) a un axe longitudinal de centre distal (x₃) qui est incliné par rapport au plan de freinage (P) de sorte que l'axe longitudinal de centre distal (x₃) se déplace dans une direction tronconique lorsque le levier de commande de frein (532) est déplacé de la position de repos à la position de freinage.

14. Dispositif de commande de freinage de bicyclette (12R, 12L ; 212R, 512R, 612R) selon l'une quelconque des revendications 1 à 12, dans lequel
au moins une majorité de la portion proximale (44, 344, 444, 544) est située à l'intérieur du support de levier de frein (30, 230, 630).

15. Dispositif de commande de freinage de bicyclette (12R, 12L ; 212R, 512R, 612R) selon l'une quelconque des revendications 6 à 12, dans lequel
au moins une majorité de la portion intermédiaire (48, 348, 448) est située à l'intérieur du support de levier de frein (30, 230, 630).

16. Dispositif de commande de freinage de bicyclette (12R, 12L ; 212R, 512R, 612R) selon la revendication 15, dans lequel
la portion intermédiaire (48, 348, 448) a une longueur longitudinale plus petite qu'une longueur longitudinale de la portion distale (46, 346, 446, 546).

17. Dispositif de commande de freinage de bicyclette (12R, 12L ; 212R, 512R, 612R) selon la revendication 15 ou 16, dans lequel
la longueur longitudinale de la portion intermédiaire (48, 348, 448) est plus petite qu'une longueur longitudinale de la portion proximale (44, 344, 444, 544).

18. Dispositif de commande de freinage de bicyclette (12R, 12L ; 212R, 512R, 612R) selon la revendication 17, dans lequel
la longueur longitudinale de la portion proximale (44, 344, 444, 544) est plus petite que la longueur longitudinale de la portion distale (46, 346, 446, 546).

19. Dispositif de commande de freinage de bicyclette (12R, 12L ; 212R, 512R, 612R) selon la revendication 15, dans lequel
la portion proximale (44, 344, 444, 544), la portion distale (46, 346, 446, 546) et la portion intermédiaire (48, 348, 448) du levier de commande de frein (32, 332, 432, 532) sont formées solidairement ensemble comme un organe unitaire en une pièce.

20. Dispositif de commande de freinage de bicyclette (12R, 12L ; 212R, 512R, 612R) selon la revendication 1, dans lequel
la portion par enclenchement par le cycliste (36b) de l'organe d'actionnement électrique (36) est positionnée entre l'axe central de guidon (C) de la portion de montage (14b, 14c) du guidon (14) et une surface de support la plus à l'extérieur latéralement du support de levier de frein (30, 230, 630) telle que mesurée perpendiculairement par rapport au plan de freinage (P).

21. Dispositif de commande de freinage de bicyclette (12R, 12L ; 212R, 512R, 612R) selon la revendication 1, dans lequel
une majorité de la portion d'enclenchement par le cycliste (36b) de l'organe d'actionnement électrique (36) est positionnée entre l'axe central de guidon (C) de la portion de montage (14b, 14c) du guidon (14) et une surface de guidon la plus extérieure latéralement de la portion de montage du guidon (14) lorsque le levier de commande de freinage (32, 332, 432, 532) est déplacé de la position de repos à la position de freinage.

22. Dispositif de commande de freinage de bicyclette (12R, 12L ; 212R, 512R, 612R) selon la revendication 1, dans lequel
la portion distale (46, 346, 446, 546) a une longueur longitudinale plus grande qu'une longueur longitudinale de la portion proximale (44, 344, 444, 544).

23. Dispositif de commande de freinage de bicyclette (12R, 12L ; 212R, 512R, 612R) selon la revendication 1, dans lequel
la portion distale (46, 346, 446, 546) a une longueur longitudinale plus petite qu'une longueur longitudinale de la portion proximale (44, 344, 444, 544).

24. Dispositif de commande de freinage de bicyclette (12R, 12L ; 212R, 512R, 612R) selon la revendication 1, dans lequel
la portion distale (46, 346, 446, 546) a une longueur longitudinale approximativement identique à une longueur longitudinale de la portion proximale (44, 344, 444, 544).

25. Dispositif de commande de freinage de bicyclette (12R, 12L ; 212R, 512R, 612R) selon la revendication 1, dans lequel
l'organe d'actionnement électrique (36) fait partie d'un commutateur de commande de vitesses électrique.

26. Dispositif de commande de freinage de bicyclette (12R, 12L ; 212R, 512R, 612R) selon la revendication 1, dans lequel
l'organe d'actionnement électrique (36) est monté tournant par rapport au levier de commande de freinage (32, 332, 432, 532).
